# EUROPÄISCHE PATENTANMELDUNG

(11) **EP 4 803 449 A1**
(43) Veröffentlichungstag der Anmeldung: **09.09.2026**
(21) Anmeldenummer: 26159220.8
(22) Anmeldetag: 18.02.2026
(51) Int. Cl.: B65G 17/12, B65G 17/34, B65G 47/53, B65G 47/57, B65G 47/61

(54) **ANORDNUNG ZUM MULTIDIREKTIONALEN TRANSPORT VON STÜCKGUT**

(30) Priorität: 28.02.2025 DE 102025107830; 10.03.2025 DE 102025108925
(71) Anmelder: Nerak GmbH Fördertechnik, 29313 Hambühren (DE)
(72) Erfinder: Wegge, Wieland, 59269 Beckum (DE)
(74) Vertreter: Patentanwälte Thömen & Körner

(57) **Zusammenfassung**

Die Erfindung bezieht sich auf eine Anordnung (10) zum multidirektionalen Transport von Stückgut (12) auf unterschiedlichen Förderebenen umfassend einen vertikalen Umlaufförderer (14) mit horizontal angeordneten Tragelementen (16) zur Aufnahme und Abgabe von Stückgut (12) auf unterschiedlichen Förderebenen und mit einer vorgegebenen umlaufenden Förderstrecke, die einen Umfang definiert, wobei der Umfang insbesondere in horizontaler Richtung derart groß vorgegeben ist, dass sich innerhalb des Umfangs ein Portal (18) ausbildet, in dem auf mindestens einer Förderebene mindestens eine Zuführ- und Entnahmeeinheit (20) und mindestens ein Portalförderer (22) angeordnet sind, wobei die Zuführ- und Entnahmeeinheit (20) dazu eingerichtet ist, Stückgut (12) von den Tragelementen (16) des Umlaufförderers (14) zu entnehmen und dem Portalförderer (22) zuzuführen, und umgekehrt Stückgut (12) dem Portalförderer (22) zu entnehmen und den Tragelementen (16) des Umlaufförderers (14) zuzuführen.

## Beschreibung

Die Erfindung betrifft eine Anordnung zum multidirektionalen Transport von Stückgut auf unterschiedlichen Förderebenen, wobei die Anordnung einen vertikalen Umlaufförderer mit horizontal angeordneten Tragelementen zur Aufnahme und Abgabe von Stückgut auf unterschiedlichen Förderebenen umfasst.

Vertikale Umlaufförderer sind aus der Intralogistik bekannt, da sie den Transport von Stückgütern bzw. Transportgütern zwischen verschiedenen Höhenebenen, die im Rahmen der vorliegenden Erfindung auch Förderebenen genannt werden, ermöglichen. Typischerweise verfügen solche Anordnungen mit vertikalem Umlaufförderer über eine oder mehrere Zuführ- und Abführförderer, die das Stückgut in den Förderprozess des vertikalem Umlaufförderers zuführen bzw. einbringen oder aus diesem abführen bzw. entnehmen.

EP 1 228 984 A1 offenbart beispielsweise einen Vertikalumlaufförderer für Restaurants und Kantinen, um Tabletts mit Lebensmitteln, Getränken oder Geschirr zu transportieren. Die Tabletts werden seitlich über einen ersten Rollenförderer bzw. über eine erste Rollenförderbahn zugeführt und über einen zweiten Rollenförderer bzw. über eine zweite Rollenförderbahn abgeführt. DE 9419746 U1 offenbart einen Umlaufförderer zum vertikalen Transport von Stückgütern zwischen zwei horizontalen Transportebenen. Dieser Umlaufförderer dient dazu, einen Höhenunterschied zwischen einem Zuführförderer und einem Abführförderer zu überwinden, um so Güter von einer Ebene auf eine andere zu transportieren. EP 1 057 758 A1 offenbart einen Vertikalförderer, der nach dem Paternosterprinzip arbeitet und für den Transport von Stückgütern zwischen unterschiedlichen Ebenen konzipiert ist.

Obwohl vertikale Umlaufförderer eine effiziente Lösung für den Transport von Gütern über unterschiedliche Höhen bieten, weisen sie im Hinblick auf die Förderrichtung von Stückgütern deutliche Einschränkungen auf. Die bekannten Umlaufförderer sind typischerweise auf eine definierte Förderrichtung ausgelegt. Dies bedeutet, dass Stückgüter, sobald sie in den Förderprozess eingespeist wurden, nur entlang des vorgegebenen Förderwegs bewegt werden können.

In modernen Produktionsumgebungen besteht jedoch oft die Notwendigkeit, Stückgüter flexibel in verschiedene Richtungen zu befördern, um auf sich ändernde Produktionsabläufe oder Kundenaufträge reagieren zu können. Die starre Förderrichtung der bekannten vertikalen Umlaufförderer erweist sich in solchen Fällen als limitierender Faktor. Es fehlt an der Möglichkeit, Stückgüter bei Bedarf gezielt umzuleiten, zu sortieren oder an unterschiedliche Zielorte zu transportieren, ohne den Förderprozess zu unterbrechen oder manuelle Eingriffe vornehmen zu müssen.

Der Erfindung liegt die Aufgabe zugrunde, eine Anordnung mit einem vertikalen Umlaufförderer zu entwickeln, welche eine flexible Zuführung und Abführung des Stückguts aus mehreren Richtungen ermöglicht.

Die Aufgabe wird durch eine Anordnung mit dem Merkmalen des Anspruchs 1 gelöst. Weiterbildungen und vorteilhafte Ausgestaltungen der Erfindung ergeben sich aus den Unteransprüchen.

Die erfindungsgemäße Anordnung zum multidirektionalen Transport von Stückgut auf unterschiedlichen Förderebenen umfasst einen vertikalen Umlaufförderer mit horizontal angeordneten Tragelementen zur Aufnahme und Abgabe von Stückgut auf unterschiedlichen, vorzugsweise drei Förderebenen und mit einer vorgegebenen umlaufenden Förderstrecke, die einen Umfang definiert, wobei der Umfang insbesondere in horizontaler Richtung derart groß vorgegeben ist, dass sich innerhalb des Umfangs ein Portal ausbildet, in dem auf mindestens einer Förderebene mindestens eine Zuführ- und Entnahmeeinheit und mindestens ein Portalförderer angeordnet sind, wobei die Zuführ- und Entnahmeeinheit dazu eingerichtet ist, Stückgut von den Tragelementen des Umlaufförderers zu entnehmen und dem Portalförderer zuzuführen, und umgekehrt Stückgut dem Portalförderer zu entnehmen und den Tragelementen des Umlaufförderers zuzuführen.

Eine solche Anordnung mit einen vertikalen Umlaufförderer mit erfindungsgemäß integriertem Portal ermöglicht erstmals einen multidirektionalen Transport von Stückgut auf verschiedenen Förderebenen. Dabei werden aufgrund der im Portal angeordneten wenigstens einen Zuführ- und Entnahmeeinheit und dem wenigstens einen Portalförderer gegenüber dem Stand der Technik weitere Transportrichtungen erschlossen, nämlich in das Portal hinein und aus dem Portal heraus, und zwar zu beiden Seiten des Portals. Dabei kann 'zu beiden Seiten' nicht nur die Zuführung oder die Abführung von Stückgut auf der einen und der anderen Seite des Portals umfassen, sondern auch, dass ein einzelner Portalförderer entweder ausschließlich für die Zuführung oder ausschließlich für die Abführung von Stückgut von nur einer Seite des Portals her genutzt wird, und auch, dass bei Vorsehen von zwei Portalförderern eine Zuführung als auch eine Abführung von Stückgut nur auf der gleichen Seite des Portals erfolgt. Dadurch werden flexible Übergaben in verschiedene Richtungen und auf verschieden Förderebenen ermöglicht. Zudem wird die Transportkapazität erhöht, da mehrere Zuführ- und Entnahmeeinheiten auf mehreren Förderebenen im Portal integriert werden können. Weiterhin wird der Platzbedarf reduziert, da das erfindungsgemäße Portal innerhalb der umlaufenden Förderstrecke liegt.

Insgesamt wird also eine Anordnung mit einem vertikalen Umlaufförderer bereitgestellt, welche eine flexible Zuführung und Abführung von Stückgut aus gegenüber dem Stand der Technik weiteren bzw. mehreren Richtungen ermöglicht.

Die erfindungsgemäße Anordnung kann dabei so ausgelegt sein, dass vorhandene Transportstrecken für Stückgut aus allen Richtungen, beispielsweise von vorne, hinten, links oder rechts, also aus mindestens vier Richtungen, an den vertikalen Umlaufförderer in jeder Förderebene angeschlossen werden können.

Es kann von Vorteil sein, wenn wenigstens ein, vorzugsweise zwei umlaufende Zugmittel vorgesehen sind, an welchen die Tragelemente befestigt und/oder gelagert sind, und welche entlang der Förderstrecke geführt sind. Insbesondere die Verwendung von zwei Zugmitteln verbessert die Stabilität der Tragelemente.

Es kann von Vorteil sein, wenn ein Zuführförderer auf mindestes einer, vorzugsweise auf jeder Förderebene vorgesehen ist, um Stückgut den Tragelementen zuzuführen. Der Zuführförderer sorgt wie im Stand der Technik für eine insbesondere kontinuierliche Stückgutzufuhr zum vertikalen Umlaufförderer und ist nicht dem Portal zugeordnet. Die Stückgutzufuhr ist hierbei vorteilhaft den Gegebenheiten flexibel anpassbar, wenn Abführförderer auf jeder Förderebene integriert ist.

Es kann von Vorteil sein, wenn ein Abführförderer auf mindestes einer, vorzugsweise auf jeder Förderebene vorgesehen ist, um Stückgut von den Tragelementen abzuführen. Der Abführförderer sorgt wie im Stand der Technik für eine insbesondere kontinuierliche Stückgutabfuhr vom vertikalen Umlaufförderer weg und ist nicht dem Portal zugeordnet. Die Stückgutabfuhr ist hierbei vorteilhaft den Gegebenheiten flexibel anpassbar, wenn ein Abführförderer auf jeder Förderebene integriert ist.

Es kann von Vorteil sein, wenn die Zuführ- und Entnahmeeinheit dazu eingerichtet ist, Stückgut direkt vom Zuführförderer zu entnehmen und dem in der gleichen Ebene vorgesehenen Portalförderer zum Weitertransport zuzuführen. Dadurch wird die Flexibilität der erfindungsgemäßen Anordnung zum Transport von Stückgut weiter erhöht.

Es kann von Vorteil sein, wenn die Zuführ- und Entnahmeeinheit dazu eingerichtet ist, Stückgut vom Portalförderer zu entnehmen und direkt dem in der gleichen Ebene vorgesehenen Abführförderer zum Weitertransport zuzuführen. Dadurch wird die Flexibilität der erfindungsgemäßen Anordnung zum Transport von Stückgut weiter erhöht.

Es kann von Vorteil sein, wenn zwei umlaufende Zugmittel entlang einer gleichartigen Förderstrecke geführt sind, wobei die Förderstrecke zwei vertikale Strecken in z-Richtung bzw. Höhenrichtung und zwei horizontale Strecken in x-Richtung umfasst, wobei die Zugmittel das gleiche Höhenniveau in z-Richtung aufweisen, aber in einem definierten Abstand in y-Richtung und in einem definierten Abstand in x-Richtung zueinander versetzt angeordnet sind, wobei die Zugmittel gemeinsam das Portal begrenzen.

Durch die erfindungsgemäße Führung der Zugmittel in der vorgegebenen Geometrie wird eine gleichmäßige synchrone Führung der Tragelemente entlang vertikaler und horizontaler Strecken erreicht. Die umlaufenden Zugmittel begrenzen hierbei das erfindungsgemäße Portal. Das Portal ist hier der Raum bzw. Zwischenraum, der durch die rechtwinklige Projektion des einen umlaufenden Zugmittel auf das andere umlaufende Zugmittel begrenzt ist.

Es kann von Vorteil sein, wenn die Tragelemente Plattformen sind, wobei jede Plattform an einer ersten Verbindungsstelle an dem einen Zugmittel und dem Versatz entsprechend an einer diagonal gegenüberliegenden zweiten Verbindungsstelle an dem anderen Zugmittel gelagert ist, so dass jede Plattform horizontal ausgerichtet ist und kontinuierlich umlaufend entlang der Förderstrecke bewegbar ist, um Stückgut zwischen verschiedenen Förderebenen zu transportieren.

Dadurch wird eine stabile horizontale Ausrichtung der Plattformen erreicht. Aufgrund des Versatzes sind zumindest eine Längsseite der Plattform gut zugänglich.

Es kann von Vorteil sein, wenn der Portalförderer ein horizontal oder geneigt angeordnetes Förderband ist, das in y-Richtung bzw. Tiefenrichtung oder in einem Winkel α zwischen x- Richtung und y- Richtung bzw. Längsrichtung von außen am Portal endet, von außen in das Portal hineinragt oder von außen durch das Portal hindurchläuft. Diese flexible Anordnung des Portalförderers schafft mehr Möglichkeiten für den Stückgutfluss, da der Portalförderer horizontal in diversen Winkeln zum, in das oder durch das Portal geführt werden kann. Dadurch wird eine einfache Integration der erfindungsgemäßen Anordnung in bestehende Systeme, beispielsweise bei bereits vorhandenen Stückguttransportstrecken verschiedener Richtungen, erreicht.

Es kann von Vorteil sein, wenn die im Portal angeordnete Zuführ- und Entnahmeeinheit derart eingerichtet ist, dass diese ein Stückgut dem Portalförderer entnimmt und einem Tragelement, das sich vertikal in z-Richtung vorzugsweise aufwärts bewegt, insbesondere von der durch den Versatz verursachten frei zugänglichen Längsseite des Tragelements her, zuführt oder dass diese ein Stückgut einem Tragelement, das sich vertikal in z-Richtung vorzugsweise abwärts bewegt, insbesondere von der durch den Versatz verursachten frei zugänglichen Längsseite des Tragelements her, entnimmt und dem Portalförderer zuführt. Da das Stückgut von einer frei zugänglichen Seite entnommen oder zugeführt wird, wird eine zuverlässige Übergabe erreicht.

Es kann von Vorteil sein, wenn jedes Zugmittel über zwei in z-Richtung obere horizontal voneinander beabstandete Umlenkräder und zwei in z-Richtung untere horizontal voneinander beabstandete Umlenkräder geführt ist, wobei der horizontale Abstand der Umlenkräder den Umfang in x-Richtung vorgibt.

Über die Umlenkräder wird vorteilhaft eine klare Streckenführung vorgegeben und der gewünschte Umfang für die Ausbildung des erfindungsgemäßen Portal festgelegt.

Es kann von Vorteil sein, wenn jedes Zugmittel über ein Antriebsrad mit Motor antreibbar ist, wobei die Antriebsräder und damit die Zugmittel synchron antreibbar sind, wobei das Antriebsrad mit Motor vorzugsweise als ein insbesondere oberes Umlenkrad ausgeführt ist.

Es kann von Vorteil sein, wenn der Zuführförderer ein in x-Richtung horizontal oder geneigt angeordnetes Förderband mit einem Fördergurt oder vorzugsweise ein in x-Richtung horizontal oder geneigt angeordneter Rollenförderer, der auch als Rollenförderbahn ausgebildet sein kann, ist, um Stückgüter den Tragelementen des vertikalen Umlaufförderers zuzuführen.

Es kann von Vorteil sein, wenn der Abführförderer ein in x-Richtung horizontal oder geneigt angeordnetes Förderband mit einem Fördergurt oder vorzugsweise ein in x-Richtung horizontal oder geneigt angeordneter Rollenförderer, der auch als Rollenförderbahn ausgebildet sein kann, ist, um Stückgüter von den Tragelementen des vertikalen Umlaufförderers abzuführen.

Es kann von Vorteil sein, wenn ein Zuführförderer und ein Abführförderer auf der gleichen Seite, aber unterschiedlichen Förderebenen, und/oder auf unterschiedlichen Seiten des vertikalen Umlaufförderers angeordnet sind.

Es kann von Vorteil sein, wenn das Zugmittel ein Riemen, insbesondere ein Zahnriemen, oder eine Kette, vorzugsweise eine Gummiblockkette, ist.

Es kann von Vorteil sein, wenn der in x-Richtung vorgegebene Versatz der Zugmittel der Länge des Tragelements in x-Richtung entspricht.

Es kann von Vorteil sein, wenn die Zugmittel und damit die Tragelemente in die eine Richtung, beispielsweise im Uhrzeigersinn, oder in die andere entgegengesetzte Richtung, beispielsweise entgegen dem Uhrzeigersinn, antreibbar sind.

Bidirektionale Antriebsrichtung erhöht die Flexibilität, da das System sowohl im als auch gegen den Uhrzeigersinn betrieben werden kann.

Es kann von Vorteil sein, wenn im Portal in zumindest einer, vorzugsweise in jeder Förderebene zwei Zuführ- und Entnahmeeinheiten angeordnet sind, wobei die eine Zuführ- und Entnahmeeinheit für die Zufuhr oder Entnahme von Stückgütern in Bezug auf die eine vertikale Seite des Umlaufförderers und die andere Zuführund Entnahmeeinheit für die Zufuhr oder Entnahme von Stückgütern in Bezug auf die andere vertikale Seite des Umlaufförderers angeordnet sind, wobei vorzugsweise jeder Förderebene, in der zwei Zuführ- und Entnahmeeinheiten angeordnet sind, auch zwei Portalförderer zugeordnet sind, wobei der eine Portalförderer in Bezug auf die eine Zuführ- und Entnahmeeinheit angeordnet ist und wobei der andere Portalförderer in Bezug auf die andere Zuführ- und Entnahmeeinheit angeordnet ist, wobei die zwei Portalförderer derart einrichtbar sind, dass sie die Stückgüter vorzugsweise in unterschiedliche Richtungen fördern.

Eine solche Anordnung erhöht nicht nur die Kapazität und Flexibilität, sondern ermöglicht eine klare Trennung unterschiedlicher Stückgutströme.

Es kann von Vorteil sein, wenn die Zuführ- und Entnahmeeinheit einen in der horizontalen Ebene um einen vorgegebenen Winkel und um eine in z-Richtung verlaufende Drehachse drehbaren Schwenkarm aufweist, wobei das eine Ende des Schwenkarms für die Zufuhr und Entnahme eins Stückguts ausgebildet ist.

Es kann von Vorteil sein, wenn das für die Zufuhr und Entnahme von Stückgut ausgebildete Ende des Schwenkarms ein horizontales Auflageelement zur Aufnahme und Abgabe von Stückgut aufweist.

Es kann von Vorteil sein, wenn das Tragelement und das Auflageelement mehrere voneinander beabstandete, einseitig über jeweils eine gemeinsame Rückwand miteinander verbundene horizontal ausgerichtete Zinken zur Ausbildung einer Transport- bzw. einer Zuführ- und Entnahmefläche aufweist.

Es kann von Vorteil sein, wenn das Tragelement und das Auflageelement für die Zufuhr von Stückgut auf das Tragelement und für die Entnahme von Stückgut von dem Tragelement derart anordbar sind, dass die Zinken des Tragelements durch die zwischen den Zinken des Auflageelements ausgebildeten Aussparungen gleiten bzw. kämmen.

Es kann vorteilhaft sein, wenn das Auflageelement für die Zufuhr von Stückgut auf den Abführförderer und/oder für die Entnahme von Stückgut von dem Zuführförderer derart anordbar sind, dass extra vorgesehene Zinken des Abführförderers und/oder des Zuführförderers durch die zwischen den Zinken des Auflageelements ausgebildeten Aussparungen gleiten bzw. kämmen.

Es kann von Vorteil sein, wenn die Zinken des Auflageelements und/oder des Abführförderers und/oder des Zuführförderers als Rollen, vorzugsweise als zumindest teilweise antreibbare Rollen ausgebildet sind.

Es kann von Vorteil sein, wenn das Auflageelement für die Zufuhr von Stückgut an auf bzw. an den Portalförderer oder für die Entnahme von Stückgut vom Portalförderer derart verschwenkbar ist, dass das Auflageelement mit der Transport- bzw. der Zuführ- und Entnahmefläche an den Portalförderer und/oder an den Zuführförderer und/oder den Abführförderer anschließt, wobei zu diesem Zweck vorzugsweise ein Freiraum am oder im Portalförderer und/oder am oder im Zuführförderer und/oder am oder im Abführförderer vorgesehen ist.

Es kann von Vorteil sein, wenn das Auflageelement der Zuführ- und Entnahmeeinheit und/oder der Portalförderer für die Zufuhr von Stückgut an bzw. auf den Portalförderer und für die Entnahme von Stückgut von dem Portalförderer ein Übergabemechanismus aufweisen.

Jeder vorgenannte Weiterentwicklung trägt zur Verbesserung des Gesamtsystems bei, sei es durch erhöhte Flexibilität, optimierte Übergabeprozesse, präzisere Steuerung oder eine höhere Förderleistung. Das System zeichnet sich besonders durch seine multidirektionale Transportfähigkeit aus und stellt eine deutliche Verbesserung gegenüber bisherigen vertikalen Umlaufförderern dar.

Weitere vorteilhafte Ausgestaltungen der Erfindung können sich aus der Zeichnung in Zusammenhang mit deren Beschreibung, wobei nachfolgend die Erfindung anhand von Ausführungsbeispielen erläutert wird, die in der Zeichnung dargestellt sind. In dieser zeigen:
- Fig. 1: auszugsweise in schematischer perspektivischer Darstellung eine erfindungsgemäße Anordnung mit Stückgut,

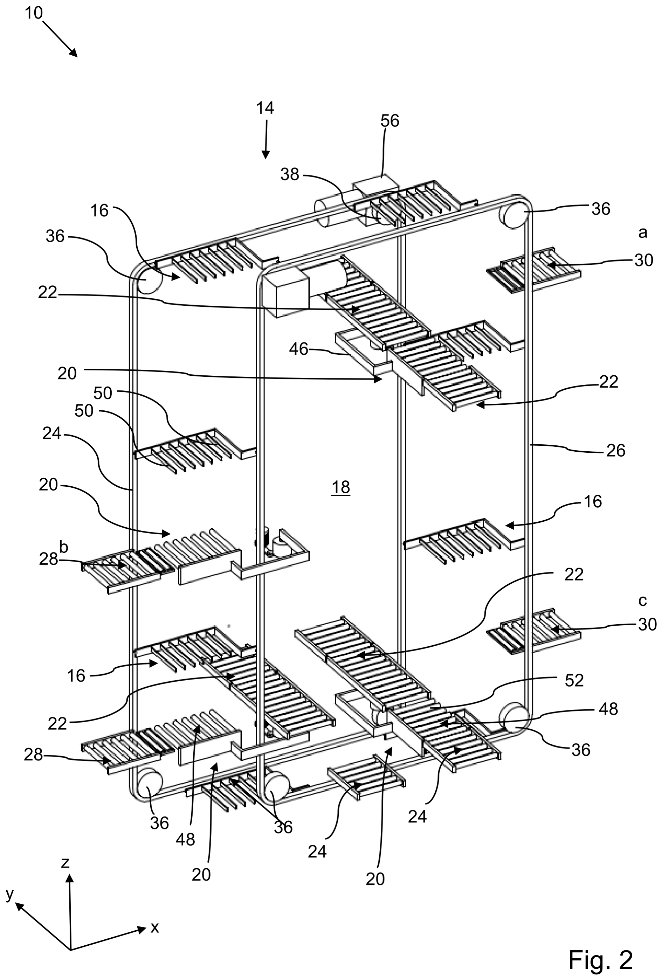

- Fig. 2: auszugsweise in schematischer perspektivischer Darstellung die erfindungsgemäße Anordnung gemäß Fig.1 ohne Stückgut,

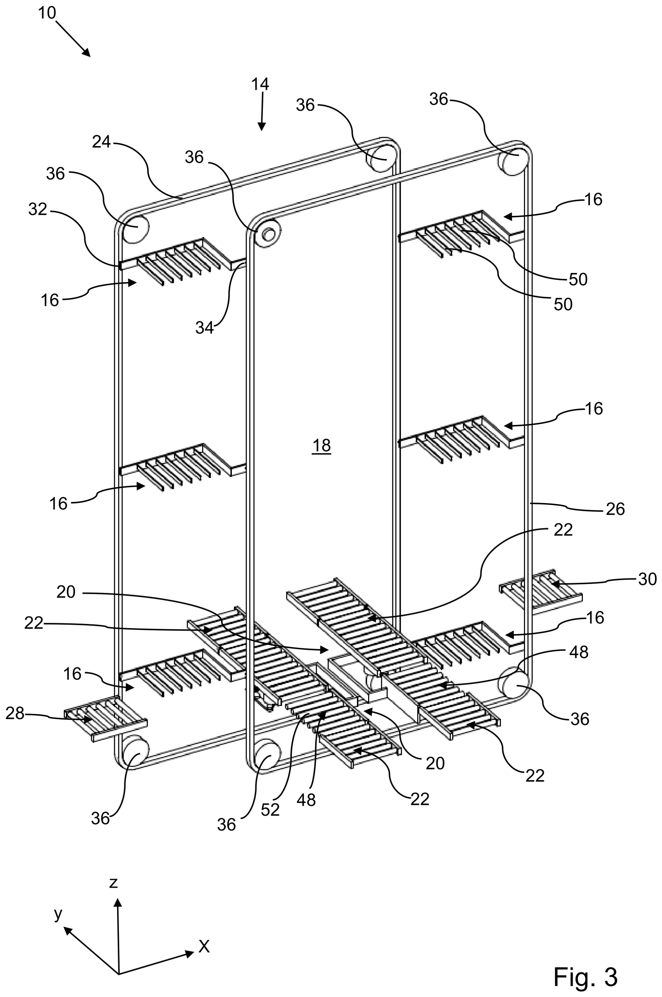

- Fig. 3: auszugsweise in schematischer perspektivischer Darstellung eine erfindungsgemäße Anordnung ohne Stückgut
- Fig. 4: auszugsweise eine schematische Draufsicht auf eine Förderebene einer erfindungsgemäßen Anordnung,
- Fig. 5: auszugsweise eine schematische Draufsicht auf eine Förderebene einer erfindungsgemäßen Anordnung,
- Fig. 6: auszugsweise in schematischer perspektivischer Darstellung eine erfindungsgemäße Anordnung ohne Stückgut

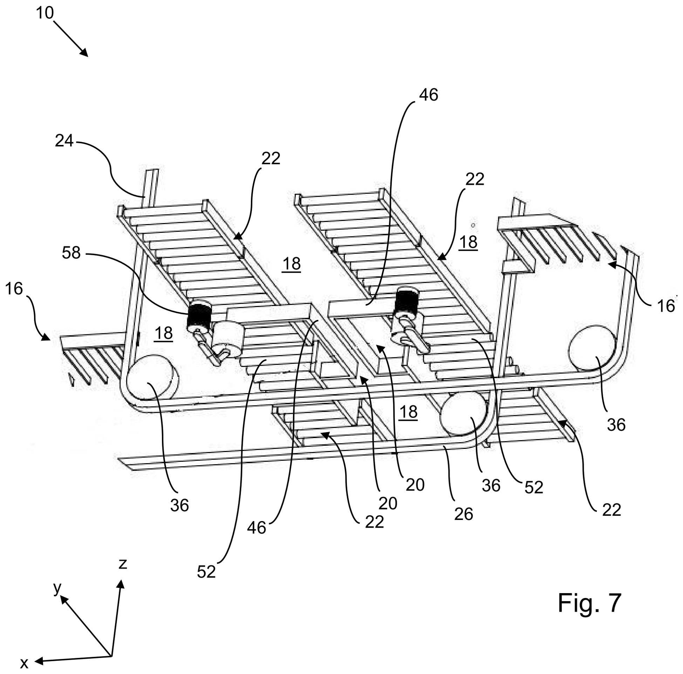

- Fig. 7: auszugsweise eine schematische perspektivische Darstellung von schräg unten auf eine Förderebene einer erfindungsgemäßen Anordnung,
- Fig. 8: auszugsweise eine schematische Draufsicht auf eine Förderebene einer erfindungsgemäßen Anordnung,
- Fig. 9: auszugsweise eine schematische Draufsicht auf eine Förderebene einer erfindungsgemäßen Anordnung und
- Fig. 10: auszugsweise eine schematische Draufsicht auf eine Förderebene einer erfindungsgemäßen Anordnung.

In der Zeichnung sind die für das Verständnis der Erfindung wesentlichen Merkmale dargestellt und erläutert. Werden in den Figuren gleiche Bezugsziffern verwendet, so bezeichnen diese gleiche Teile.

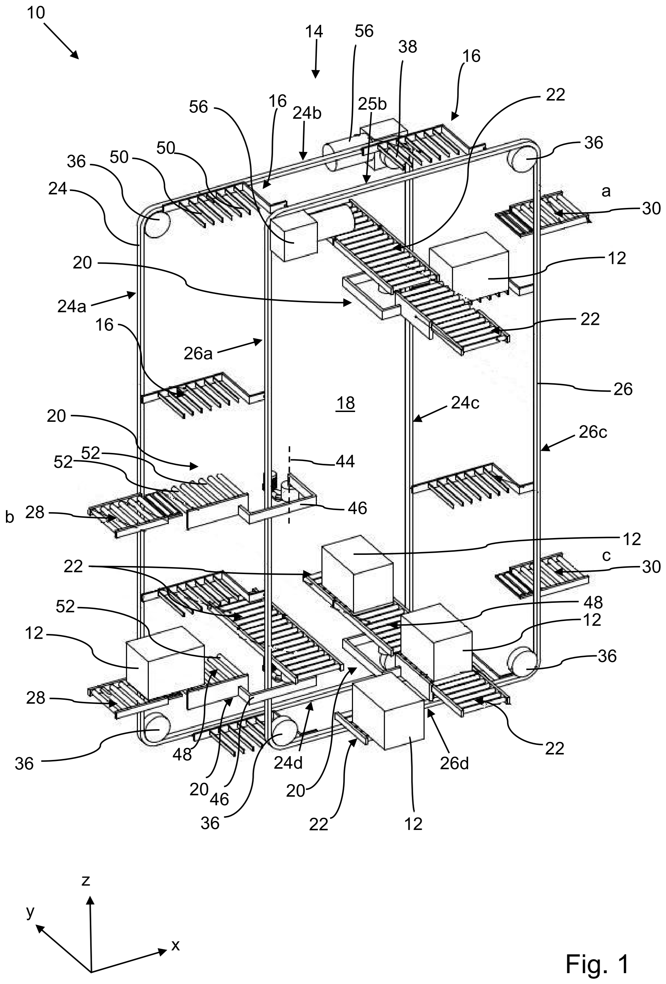

Die Figuren zeigen auszugsweise in schematischer Darstellung eine erfindungsmäße Anordnung 10 zum multidirektionalen Transport von Stückgut 12 auf unterschiedlichen Förderebenen, vorliegend - wie in Fig. 1 auszugsweise dargestellt, eine obere Förderebene a, eine mittlere Förderebene b und eine untere Förderebene c. Vorzugsweise entsprechen alle Förderebenen dem Aufbau der Förderebene c. Der besseren Übersicht halber sind in den Förderebenen a und b Teile nicht dargestellt.

Die erfindungsgemäße Anordnung umfasst einen vertikalen Umlaufförderer 14 mit horizontal angeordneten Tragelementen 16 zur Aufnahme und Abgabe von Stückgut 12 auf unterschiedlichen Förderebenen a, b und c und mit einer vorgegebenen umlaufenden Förderstrecke, vorliegend durch die Zugmittel 24, 26 beschrieben, und einen Umfang definiert, wobei der Umfang insbesondere in horizontaler Richtung, der x-Richtung, derart groß vorgegeben ist, dass sich innerhalb des Umfangs ein Portal 18 ausbildet, in dem auf mindestens einer Förderebene mindestens eine Zuführ- und Entnahmeeinheit 20 und mindestens ein Portalförderer 22 angeordnet sind, wobei die Zuführ- und Entnahmeeinheit 20 dazu eingerichtet ist, Stückgut 12 von den Tragelementen 16 des Umlaufförderers 14 zu entnehmen und dem Portalförderer 22 zuzuführen, und umgekehrt Stückgut 12 dem Portalförderer 22 zu entnehmen und den Tragelementen 16 des Umlaufförderers 14 zuzuführen.

Vorliegend sind zwei umlaufende Zugmittel 24, 26 vorgesehen, an welchen die Tragelemente 16 gelagert sind, und welche entlang der Förderstrecke geführt werden.

Ein Zuführförderer 28 ist vorzugsweise auf jeder Förderebene a, b, c vorgesehen, um Stückgut 12 den Tragelementen 16 zuzuführen. Dadurch wird die Flexibilität der Anordnung 10 zum multidirektionalen Transport von Stückgut 12 erhöht. Ein Abführförderer 30 ist ebenfalls vorzugsweise auf jeder Förderebene a, b, c vorgesehen, um Stückgut 12 von den Tragelementen 16 abzuführen. Auch dadurch wird die Flexibilität der Anordnung 10 zum multidirektionalen Transport von Stückgut 12 erhöht. Grundsätzlich kann jeder Zuführförderer 28 in einen Abführförderer 30 umgewandelt werden, wenn die Förderrichtung umgekehrt wird.

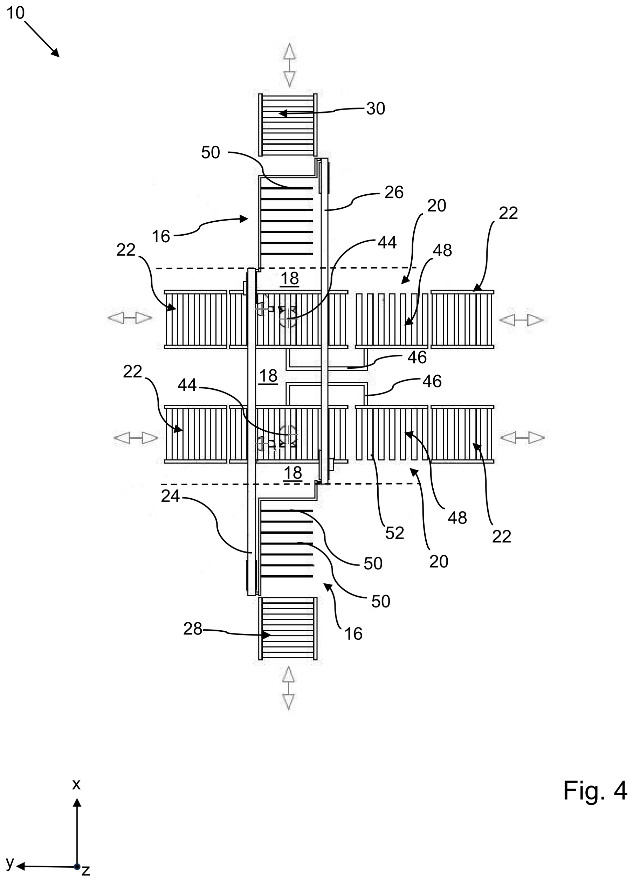

Die zwei umlaufenden Zugmittel 24, 26 sind entlang einer gleichartigen Förderstrecke geführt, wobei die Förderstrecke - wie in Fig. 1 dargestellt - zwei vertikale Strecken 24a, 24c, 26a, 26c in z-Richtung z und zwei horizontale Strecken 24b, 24d, 26b, 26d in x-Richtung x umfasst, wobei die Zugmittel 24, 26 das gleiche Höhenniveau in z-Richtung z aufweisen, aber in einem definierten Abstand in y-Richtung y und in einem definierten Abstand in x-Richtung x zueinander versetzt angeordnet sind, wobei die Zugmittel 24, 26 gemeinsam das Portal 18 begrenzen. In Fig. 4 sind zwei gestrichelte Linien eingefügt wurden, um das Portal 18 besser kenntlich zu machen.

Bei den Tragelementen 16 handelt es sich um Plattformen, wobei jede Plattform an einer ersten Verbindungsstelle 32 an dem einen Zugmittel 24 und dem Versatz entsprechend an einer diagonal gegenüberliegenden zweiten Verbindungsstelle 34 an dem anderen Zugmittel 26 gelagert ist, so dass jede Plattform stets horizontal ausgerichtet ist und dabei kontinuierlich umlaufend entlang der Förderstrecke bewegbar ist, um Stückgut 12 zwischen den verschiedenen Förderebenen a, b und c zu transportieren.

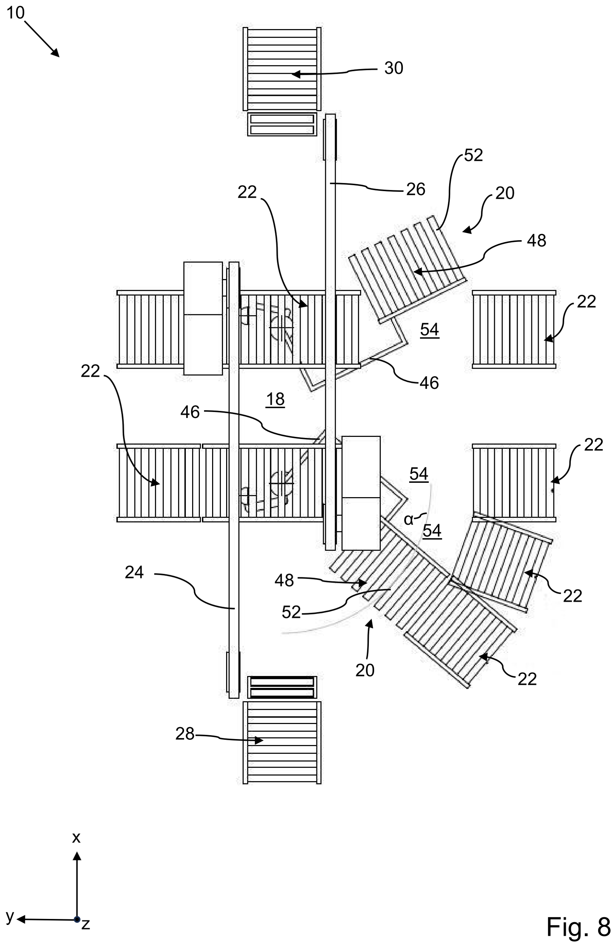

Bei dem Portalförderer 22 handelt es sich um ein horizontal oder geneigt angeordnetes Förderband mit einem Fördergurt oder - wie hier - um ein horizontal oder geneigt angeordneten Rollenförderer, der in y-Richtung y oder in einem Winkel α zwischen x- und y- Richtung von außen am Portal 18 endet, von außen in das Portal 18 hineinragt oder - wie hier - von außen durch das Portal 18 hindurchläuft. In Fig. 8 sind einzelne Winkelstellungen des Portalförderers 22 dargestellt, wobei die im Portal 18 zumindest teilweise angeordnete Zuführ- und Entnahmeeinheit 20 entsprechende Winkelstellungen einnimmt.

Die im Portal 18 zumindest teilweise angeordnete Zuführ- und Entnahmeeinheit 20 ist derart eingerichtet, dass diese 20 ein Stückgut 12 dem Portalförderer 22 entnimmt und einem Tragelement 16, das sich vertikal in z-Richtung vorzugsweise aufwärts bewegt, insbesondere von der durch den Versatz verursachten frei zugänglichen Längsseite des Tragelements 16 her, zuführt oder dass diese 20 ein Stückgut 12 einem Tragelement 16, das sich vertikal in z-Richtung vorzugsweise abwärts bewegt, insbesondere von der durch den Versatz verursachten frei zugänglichen Längsseite des Tragelements 16 her, entnimmt und dem Portalförderer 22 zuführt.

Jedes Zugmittel 24, 26 ist über zwei in z-Richtung obere horizontal voneinander beabstandete Umlenkräder 36 und zwei in z-Richtung untere horizontal voneinander beabstandete Umlenkräder 36 geführt, wobei der horizontale Abstand der Umlenkräder 36 den Umfang in x-Richtung vorgibt.

Jedes Zugmittel 24, 26 ist über ein Antriebsrad 38 mit Motor 56 antreibbar, wobei die Antriebsräder 38 und damit die Zugmittel 24, 26 synchron antreibbar sind, wobei das Antriebsrad 38 mit Motor vorzugsweise als ein insbesondere oberes Umlenkrad 36 ausgeführt ist.

Der Zuführförderer 28 ist ein in x-Richtung horizontal oder geneigt angeordnetes Förderband mit einem Fördergurt oder vorzugsweise - wie hier - ein in x-Richtung horizontal oder geneigt angeordneter Rollenförderer, um Stückgüter 12 den Tragelementen 16 des vertikalen Umlaufförderers 14 zuzuführen. Der Abführförderer 30 ist ein in x-Richtung horizontal oder geneigt angeordnetes Förderband mit einem Fördergurt oder vorzugsweise - wie hier - ein in x-Richtung horizontal oder geneigt angeordneter Rollenförderer ist, um Stückgüter 12 von den Tragelementen 16 des vertikalen Umlaufförderers 14 abzuführen.

Die Zuführförderer 28 und die Abführförderer 30 sind vorzugsweise auf gegenüberliegenden Seiten und in unterschiedlichen Förderebenen des vertikalen Umlaufförderers 14 angeordnet.

Bei dem Zugmittel 24, 26 handelt es sich vorzugsweise um eine Gummiblockkette.

Wie in den Figuren gut zu erkennen, entspricht der in x-Richtung vorgegebene Versatz der Zugmittel 24, 26 der Länge des Tragelements 16 bzw. der Plattform in x-Richtung.

Je nach gewünschter Konfiguration können die Zugmittel 24, 26 und damit die Tragelemente 16 in die eine Richtung, beispielsweise im Uhrzeigersinn, oder in die andere entgegengesetzte Richtung, beispielsweise entgegen dem Uhrzeigersinn, antreibbar sind. Entsprechend vielseitig können die Förderrichtungen der Portalförderer, aber auch der Zuführ- und Abführförderer eingestellt werden. Ein Zuführförderer wird dann zum Abführförderer und umgekehrt. Das wird in Fig. 4 durch die Doppelpfeile verdeutlicht.

Die Zugmittel 24, 26 werden kontinuierlich angetrieben. Drehen die Antriebsräder 38 die Zugmittel in y-Richtung betrachtet nach rechts, also im Uhrzeigersinn, kann Stückgut 12 von links 40 eingeschleust werden. Drehen die Antriebsräder 38 die Zugmittel 24, 26 in y-Richtung betrachtet nach links, also gegen den Uhrzeigersinn, kann Stückgut 12 von rechts 42 eingeschleust werden. Wird von links 40 eingeschleust, kann nach rechts 42 ausgeschleust werden. Wird von rechts 42 eingeschleust, kann nach links 40 ausgeschleust werden. Die Drehrichtung des vertikalen Umlaufförderers bestimmt somit die Ein- bzw. Zuführ- und die Ausschleus- bzw. Abführrichtungen.

Wie bereits erläutert, wenn auch in den Figuren nicht vollständig dargestellt, kann größte Flexibilität der Anordnung 10 dadurch erreicht werden, dass im Portal 18 in jeder Förderebene zwei Zuführ- und Entnahmeeinheiten 20 angeordnet sind, wobei die eine Zuführ- und Entnahmeeinheit 20 für die Zufuhr oder Entnahme von Stückgütern 12 in Bezug auf die eine vertikale Seite 40 des Umlaufförderers 14 und die andere Zuführ- und Entnahmeeinheit 20 für die Zufuhr oder Entnahme von Stückgütern 12 in Bezug auf die andere vertikale Seite 42 des Umlaufförderers 14 angeordnet sind, wobei jeder Förderebene, in der zwei Zuführ- und Entnahmeeinheiten 20 angeordnet sind, auch mindestens zwei Portalförderer 22 zugeordnet sind, wobei der eine Portalförderer 22 in Bezug auf die eine Zuführ- und Entnahmeeinheit 20 angeordnet ist und wobei der andere Portalförderer 22 in Bezug auf die andere Zuführ- und Entnahmeeinheit 20 angeordnet ist, wobei die zwei Portalförderer 22 derart einrichtbar sind, dass sie die Stückgüter 12 vorzugsweise in unterschiedliche Richtungen fördern.

Die Zuführ- und Entnahmeeinheit 20 weist einen in der horizontalen Ebene um einen vorgegebenen Winkel α und um eine in z-Richtung verlaufende Drehachse 44 drehbaren Schwenkarm 46 auf, wobei das eine Ende des Schwenkarms 46 für die Zufuhr und Entnahme eines Stückguts 12 ausgebildet ist. Die Schwenkbewegung erfolgt mittels eines Antriebs 58. Das für die Zufuhr und Entnahme von Stückgut 12 ausgebildete Ende des Schwenkarms 46 weist hierfür ein horizontales Auflageelement 48 zur Aufnahme und Abgabe von Stückgut 12 auf.

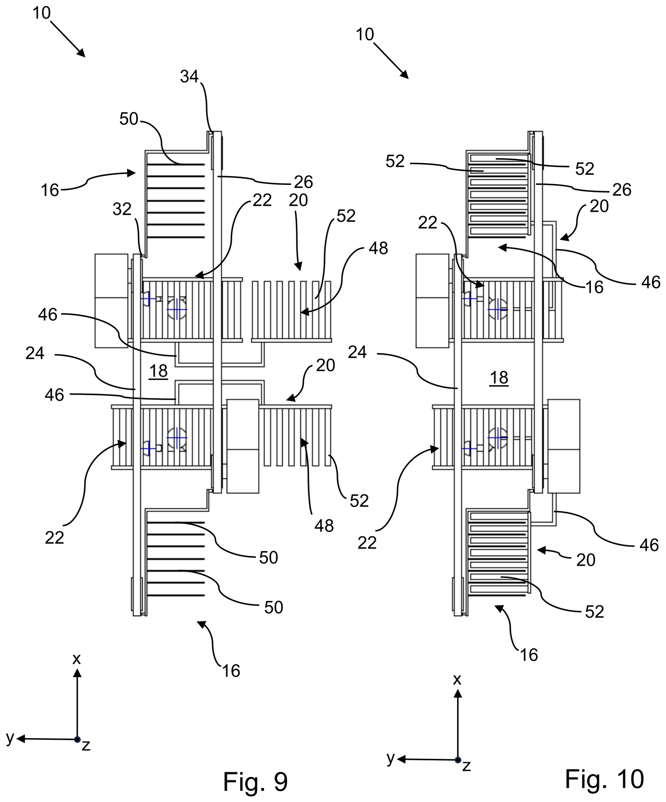

Das Tragelement 16 und das Auflageelement 48 weisen mehrere voneinander beabstandete, einseitig über jeweils eine gemeinsame Rückwand miteinander verbundene horizontal ausgerichtete Zinken 50, 52 zur Ausbildung einer Transport- bzw. einer Zuführ- und Entnahmefläche auf, wobei das Tragelement 16 und das Auflageelement 48 für die Zufuhr von Stückgut 12 auf das Tragelement 16 und für die Entnahme von Stückgut 12 von dem Tragelement 16 derart anordbar sind, dass die Zinken 50 des Tragelements 16 durch die zwischen den Zinken 52 des Auflageelements 48 ausgebildeten Aussparungen gleiten bzw. kämmen. Dies ist gut in Fig. 10 dargestellt.

Die Zinken 52 des Auflageelements 48 sind als Rollen, vorzugsweise als zumindest teilweise antreibbare Rollen ausgebildet.

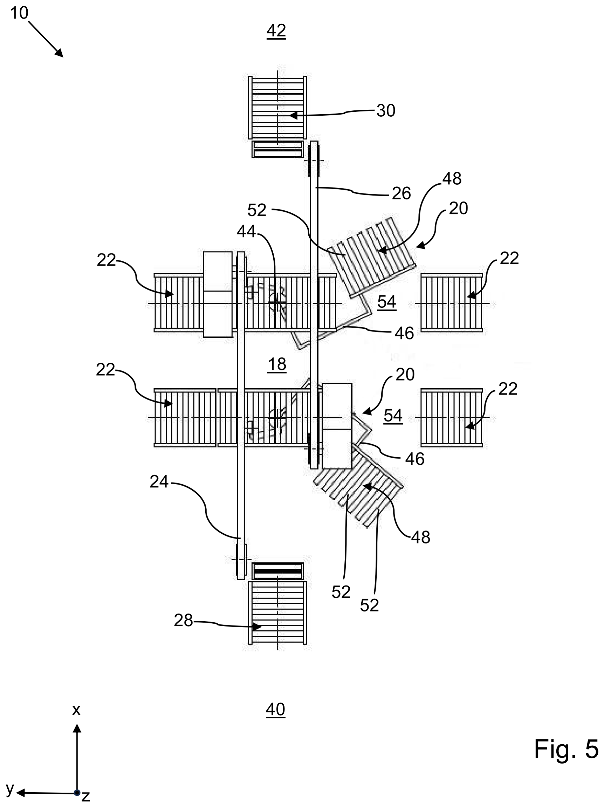

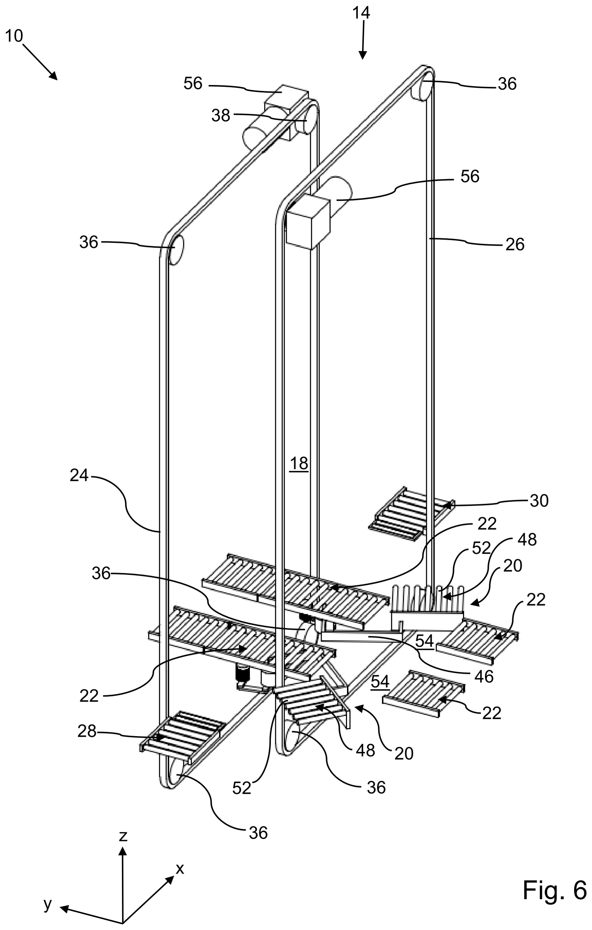

Das Auflageelement 48 für die Zufuhr von Stückgut 12 auf den Portalförderer 22 oder für die Entnahme von Stückgut 12 vom Portalförderer 22 ist derart verschwenkbar, dass das Auflageelement 48 mit der Transport- bzw. der Zuführ- und Entnahmefläche an den Portalförderer 22 anschließt, wobei zu diesem Zweck vorzugsweise ein Freiraum 54 am oder im Portalförderer 22 vorgesehen ist, vgl. hierzu insbesondere die Fig. 5, 6 und 8.

Das Auflageelement 48 der Zuführ- und Entnahmeeinheit 20 und/oder der Portalförderer 22 für die Zufuhr von Stückgut 12 auf den Portalförderer 22 und für die Entnahme von Stückgut 12 von dem Portalförderer 22 können anstelle der hier bevorzugt antreibbaren Rollen selbstverständlich auch einen anderen Übergabemechanismus aufweisen, beispielsweise einen Schieber oder ein Kippmechanismus, beispielsweise für die Zinken bzw. Rollen des Auflageelements.

### Bezugszeichenliste

### (ist Teil der Beschreibung)

- 10: Anordnung
- 12: Stückgut
- 14: Umlaufförderer
- 16: Tragelement, Plattform
- 18: Portal
- 20: Zuführ- und Entnahmeeinheit
- 22: Portalförderer
- 24: Zugmittel
- 24a: vertikale Strecke
- 24b: horizontale Strecke
- 24c: vertikale Strecke
- 24d: horizontale Strecke
- 26: Zugmittel
- 26a: vertikale Strecke
- 26b: horizontale Strecke
- 26c: vertikale Strecke
- 26d: horizontale Strecke
- 28: Zuführförderer
- 30: Abführförderer
- 32: erste Verbindungsstelle
- 34: zweite Verbindungsstelle
- 36: Umlenkräder
- 38: Antriebsrad
- 40: die eine vertikale Seite
- 42: die andere vertikale Seite
- 44: Drehachse
- 46: Schwenkarm
- 48: Auflageelement
- 50: Zinken
- 52: Zinken/Rollen
- 54: Freiraum
- 56: Motor
- 58: Antrieb

## Patentansprüche

1. Anordnung (10) zum multidirektionalen Transport von Stückgut (12) auf unterschiedlichen Förderebenen umfassend einen vertikalen Umlaufförderer (14) mit horizontal angeordneten Tragelementen (16) zur Aufnahme und Abgabe von Stückgut (12) auf unterschiedlichen Förderebenen und mit einer vorgegebenen umlaufenden Förderstrecke, die einen Umfang definiert, wobei der Umfang insbesondere in horizontaler Richtung derart groß vorgegeben ist, dass sich innerhalb des Umfangs ein Portal (18) ausbildet, in dem auf mindestens einer Förderebene mindestens eine Zuführ- und Entnahmeeinheit (20) und mindestens ein Portalförderer (22) angeordnet sind, wobei die Zuführ- und Entnahmeeinheit (20) dazu eingerichtet ist, Stückgut (12) von den Tragelementen (16) des Umlaufförderers (14) zu entnehmen und dem Portalförderer (22) zuzuführen, und umgekehrt Stückgut (12) dem Portalförderer (22) zu entnehmen und den Tragelementen (16) des Umlaufförderers (14) zuzuführen.

2. Anordnung (10) nach Anspruch 1, **dadurch gekennzeichnet, dass** wenigstens ein, vorzugsweise zwei umlaufende Zugmittel (24, 26) vorgesehen sind, an welchen die Tragelemente (16) befestigt und/oder gelagert sind, und welche entlang der Förderstrecke geführt sind.

3. Anordnung (10) nach Anspruch 1 oder 2, **dadurch gekennzeichnet, dass** ein Zuführförderer (28) auf mindestes einer, vorzugsweise auf jeder Förderebene vorgesehen ist, um Stückgut (12) den Tragelementen (16) zuzuführen, wobei vorzugsweise die Zuführ- und Entnahmeeinheit (20) dazu eingerichtet ist, Stückgut (12) vom Zuführförderer (28) zu entnehmen und dem Portalförderer (22) zuzuführen.

4. Anordnung (10) nach zumindest einem der vorherigen Ansprüche, **dadurch gekennzeichnet, dass** ein Abführförderer (30) auf mindestes einer, vorzugsweise auf jeder Förderebene vorgesehen ist, um Stückgut (12) von den Tragelementen (16) abzuführen, wobei vorzugsweise die Zuführ- und Entnahmeeinheit (20) dazu eingerichtet ist, Stückgut (12) vom Portalförderer (22) zu entnehmen und dem Abführförderer (30) zuzuführen.

5. Anordnung (10) nach zumindest einem der vorherigen Ansprüche, **dadurch gekennzeichnet, dass** zwei umlaufende Zugmittel (24, 26) entlang einer gleichartigen Förderstrecke geführt sind, wobei die Förderstrecke zwei vertikale Strecken (24a, 24c, 26a, 26c) in z-Richtung (z) und zwei horizontale Strecken (24b, 24d, 26b, 26d) in x-Richtung (x) umfasst, wobei die Zugmittel (24, 26) das gleiche Höhenniveau in z-Richtung (z) aufweisen, aber in einem definierten Abstand in y-Richtung (y) und in einem definierten Abstand in x-Richtung (x) zueinander versetzt angeordnet sind, wobei die Zugmittel (24, 26) gemeinsam das Portal (18) begrenzen.

6. Anordnung (10) nach zumindest einem der vorherigen Ansprüche, **dadurch gekennzeichnet, dass** die Tragelemente (16) Plattformen sind, wobei jede Plattform an einer ersten Verbindungsstelle (32) an dem einen Zugmittel (24) und dem Versatz entsprechend an einer diagonal gegenüberliegenden zweiten Verbindungsstelle (34) an dem anderen Zugmittel (26) gelagert ist, so dass jede Plattform horizontal ausgerichtet ist und kontinuierlich umlaufend entlang der Förderstrecke bewegbar ist, um Stückgut (12) zwischen verschiedenen Förderebenen zu transportieren.

7. Anordnung (10) nach zumindest einem der vorherigen Ansprüche, **dadurch gekennzeichnet, dass** der Portalförderer (22) ein horizontal oder geneigt angeordnetes Förderband ist, das in y-Richtung (y) oder in einem Winkel α zwischen xund y- Richtung von außen am Portal (18) endet, von außen in das Portal (18) hineinragt oder von außen durch das Portal (18) hindurchläuft.

8. Anordnung (10) nach zumindest einem der vorherigen Ansprüche, **dadurch gekennzeichnet, dass** die im Portal (18) angeordnete Zuführ- und Entnahmeeinheit (20) derart eingerichtet ist, dass diese (20) ein Stückgut (12) dem Portalförderer (22) entnimmt und einem Tragelement (16), das sich vertikal in z-Richtung vorzugsweise aufwärts bewegt, insbesondere von der durch den Versatz verursachten frei zugänglichen Längsseite des Tragelements (16) her, zuführt oder dass diese (20) ein Stückgut (12) einem Tragelement (16), das sich vertikal in z-Richtung vorzugsweise abwärts bewegt, insbesondere von der durch den Versatz verursachten frei zugänglichen Längsseite des Tragelements (16) her, entnimmt und dem Portalförderer (22) zuführt.

9. Anordnung (10) nach zumindest einem der vorherigen Ansprüche, **dadurch gekennzeichnet, dass** jedes Zugmittel (24, 26) über zwei in z-Richtung obere horizontal voneinander beabstandete Umlenkräder (34) und zwei in z-Richtung untere horizontal voneinander beabstandete Umlenkräder (36) geführt ist, wobei der horizontale Abstand der Umlenkräder (34, 36), den Umfang in x-Richtung vorgibt.

10. Anordnung (10) nach zumindest einem der vorherigen Ansprüche, **dadurch gekennzeichnet, dass** ein Zuführförderer (28) und ein Abführförderer (30) auf der gleichen Seite und/oder auf unterschiedlichen Seiten des vertikalen Umlaufförderers (14) angeordnet sind.

11. Anordnung (10) nach zumindest einem der vorherigen Ansprüche, **dadurch gekennzeichnet, dass** im Portal (18) in zumindest einer, vorzugsweise in jeder Förderebene zwei Zuführ- und Entnahmeeinheiten (20) angeordnet sind, wobei die eine Zuführ- und Entnahmeeinheit (20) für die Zufuhr oder Entnahme von Stückgütern (12) in Bezug auf die eine vertikale Seite (40) des Umlaufförderers (14) und die andere Zuführ- und Entnahmeeinheit (20) für die Zufuhr oder Entnahme von Stückgütern (12) in Bezug auf die andere vertikale Seite (42) des Umlaufförderers (14) angeordnet sind, wobei vorzugsweise jeder Förderebene, in der zwei Zuführ- und Entnahmeeinheiten (20) angeordnet sind, auch zwei Portalförderer (22) zugeordnet sind, wobei der eine Portalförderer (22) in Bezug auf die eine Zuführ- und Entnahmeeinheit (20) angeordnet ist und wobei der andere Portalförderer (22) in Bezug auf die andere Zuführ- und Entnahmeeinheit (20) angeordnet ist, wobei die zwei Portalförderer (22) derart einrichtbar sind, dass sie die Stückgüter (12) vorzugsweise in unterschiedliche Richtungen fördern.

12. Anordnung (10) nach zumindest einem der vorherigen Ansprüche, **dadurch gekennzeichnet, dass** die Zuführ- und Entnahmeeinheit (20) einen in der horizontalen Ebene um einen vorgegebenen Winkel und um eine in z-Richtung verlaufende Drehachse (44) drehbaren Schwenkarm (46) aufweist, wobei das eine Ende des Schwenkarms (46) für die Zufuhr und Entnahme eins Stückguts (12) ausgebildet ist, wobei vorzugsweise das für die Zufuhr und Entnahme von Stückgut (12) ausgebildete Ende des Schwenkarms (44) ein horizontales Auflageelement (48) zur Aufnahme und Abgabe von Stückgut (12) aufweist.

13. Anordnung (10) nach zumindest einem der vorherigen Ansprüche, **dadurch gekennzeichnet, dass** das Tragelement (16) und das Auflageelement (48) mehrere voneinander beabstandete, einseitig über jeweils eine gemeinsame Rückwand miteinander verbundene horizontal ausgerichtete Zinken (50, 52) zur Ausbildung einer Transport- bzw. einer Zuführ- und Entnahmefläche aufweisen.

14. Anordnung (10) nach zumindest einem der vorherigen Ansprüche, **dadurch gekennzeichnet, dass** das Tragelement (16) und das Auflageelement (48) für die Zufuhr von Stückgut (12) auf das Tragelement (16) und/oder auf den Abführförderer (30) und für die Entnahme von Stückgut (12) von dem Tragelement (16) und/oder dem Zuführförderer (28) derart anordbar sind, dass die Zinken (50) des Tragelements (16) und/oder des Abführförderers (30) und/oder des Zuführförderers (28) durch die zwischen den Zinken (52) des Auflageelements (48) ausgebildeten Aussparungen gleiten bzw. kämmen.

15. Anordnung (10) nach zumindest einem der vorherigen Ansprüche, **dadurch gekennzeichnet, dass** das Auflageelement (48) für die Zufuhr von Stückgut (12) auf den Portalförderer (22) oder für die Entnahme von Stückgut (12) vom Portalförderer (22) derart verschwenkbar ist, dass das Auflageelement (48) mit der Transport- bzw. der Zuführ- und Entnahmefläche an den Portalförderer (22) und/oder an den Zuführförderer (28) und/oder den Abführförderer (30) anschließt, wobei zu diesem Zweck vorzugsweise ein Freiraum (54) am oder im Portalförderer (22) und/oder am oder im Zuführförderer (28) und/oder am oder im Abführförderer (30) vorgesehen ist.
